Europäisches Patentamt

European Patent Office

Office européen des brevets

(19)

(11) Publication number : **0 382 318 B1**

# (12) EUROPEAN PATENT SPECIFICATION

(45) Date of publication of patent specification :
**03.11.93 Bulletin 93/44**

(51) Int. Cl.⁵ : **B01F 17/16,** C09K 7/02,
E21B 43/22, E21B 43/25,
E21B 33/138

(21) Application number : **90200282.3**

(22) Date of filing : **07.02.90**

(54) **Surfactant composition.**

(30) Priority : **08.02.89 GB 8902762**

(43) Date of publication of application :
**16.08.90 Bulletin 90/33**

(45) Publication of the grant of the patent :
**03.11.93 Bulletin 93/44**

(84) Designated Contracting States :
**DE DK GB NL**

(56) References cited :
**EP-A- 0 255 161**
**EP-A- 0 271 943**
**US-A- 3 107 726**
**US-A- 4 120 358**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Muijs, Herman Mathieu
Badhuisweg 3
NL-1031 CM Amsterdam (NL)**
Inventor : **Van Schaik, Jan
Badhuisweg 3
NL-1031 CM Amsterdam (NL)**

EP 0 382 318 B1

## Description

The present invention relates to a surfactant composition comprising an alkyl amine ethoxylate for use in an aqueous liquid. Such an aqueous liquid can be a component of a drilling fluid or of a fluid used to stimulate oil production from a subterranean reservoir. The alkyl group of the alkyl amine ethoxylate contains suitably between 10 and 20 carbon atoms and more suitably between 16 and 18 carbon atoms, the number of ethylene oxide groups is suitably between 3 and 15 and more suitably between 10 and 15.

At ambient temperature alkyl amine ethoxylate is a viscous wax-like liquid, which if mixed with water at ambient temperature and at a concentration between about 15% by mass and 80% by mass forms a gel. Therefore when a mass of alkyl amine ethoxylate is mixed with water a gel is formed on the outer surface of the mass, so that the mass is covered with a skin through which water can pass slowly. In order to dissolve the mass of alkyl amine ethoxylate the mixture has to be stirred to break the mass in smaller parts. Complete dissolution will only occur when the alkyl amine ethoxylate concentration is below about 15% by mass.

It is an object of the present invention to provide a surfactant composition which includes an alkyl amine ethoxylate and which dissolves faster in an aqueous liquid.

To this end the surfactant composition according to the invention comprises an alkyl amine ethoxylate and a gel breaker, wherein the gel breaker is a random copolymer of ethylene oxide with propylene oxide and/or butylene oxide.

Suitably the mass ratio between alkyl amine ethoxylate and the gel breaker is in the range of from 3 to 15. The contribution of the ethylene oxide groups to the molecular weight of gel breaker is in the range of from 300 to 900.

Suitably the molar ratio of ethylene oxide groups in the gel breaker and propylene oxide and/or butylene oxide groups is in the range of from 10 to 20.

The invention further relates to an oil well fluid for use in drilling a borehole in a subterranean formation, or for use in overhauling a borehole, which fluid comprises a stable oil-in-water emulsion including between 50 and 96 %v of an aqueous phase, between 3 and 40 %v of an oil phase, and between 1 and 10 %v of the surfactant composition according to the invention.

The invention also relates to an oil production fluid, such as a fluid used to stimulate oil production from a subterranean reservoir, which fluid comprises a stable oil-in-water emulsion including between 50 and 96 %v of an aqueous phase, between 3 and 35 %v of an oil phase, and between 1 and 15 %v of the surfactant composition according to the invention.

## EXAMPLE

The experiments which will be described hereinafter were carried out to determine the solubility-rate of $0.2*10^{-3}$ litre of a surfactant composition in $100*10^{-3}$ litre of an aqueous liquid.

The experiments were carried out with the use of a transparent vessel arranged on a thermostat and which vessel was provided with a stirrer, a light source and an apparatus for monitoring the absorbance of light in the liquid. To facilitate monitoring the absorbance, to the surfactant composition was added $100*10^{-6}$ litre of a dye solution consisting of 5 %w fluorescein di-sodium salt in 2-methyl-2,4-pentanediol. As the surfactant composition dissolved in the stirred liquid the absorbance increased, and the surfactant composition was completely dissolved when the absorbance remained constant. The solubility-rate is the time elapsed until complete solution of the surfactant composition, this time is expressed in minutes.

The cloud point as included in the table was determined for 0.05 kg of the surfactant composition dissolved in 1 kg of brine, wherein the brine contains 0.1 kg of potassium chloride in water.

The storage test comprised storing the surfactant composition for 48 hours at 0 °C, the appearance of the surfactant composition at the end of the period being included in the table.

The alkyl amine ethoxylate as used in the experiments is NONIDET AT 12 (trade name) which has an alkyl group including between 16 and 18 carbon atoms and 12 ethylene oxide groups.

Surfactant composition A (according to the invention) comprises 80% by mass of alkyl amine ethoxylate and 20% by mass PEG 600 PR (trade name, ex Hoechst) which is a random copolymer of ethylene oxide and 7 mol% propylene oxide with an average molecular weight of 600.

Surfactant compositions B, C, D, E, F, G and H were prepared not according to the invention to carry out comparative experiments.

Surfactant composition B (not according to the invention) comprises 100% by mass of alkyl amine ethoxylate.

Surfactant composition C (not according to the invention) comprises 80% by mass of alkyl amine ethoxylate. and 20% by mass of a polyethylene glycol with an average molecular weight of 400.

Surfactant composition D (not according to the invention) comprises 80% by mass of alkyl amine ethoxylate. and 20% by mass of a polyethylene glycol with an average molecular weight of 600.

Surfactant composition E (not according to the invention) comprises 80% by mass of alkyl amine ethoxylate. and 20% by mass of a polypropylene glycol with an average molecular weight of 400.

Surfactant composition F (not according to the invention) comprises 80% by mass of alkyl amine ethoxylate. and 20% by mass of a polypropylene glycol with an average molecular weight of 2 000.

Surfactant composition G (not according to the invention) comprises 80% by mass of alkyl amine ethoxylate. and 20% by mass of SYNPERONIC PE/L31 (trade name, ex ICI) a block copolymer of propylene oxide and ethylene oxide containing 10 mol% ethylene oxide and having an average molecular weight of 1 100.

Surfactant composition H (not according to the invention) comprises 80% by mass of alkyl amine ethoxylate. and 20% by mass of SYNPERONIC PE/L61 (trade name, ex ICI) a block copolymer of propylene oxide and ethylene oxide containing 10 mol% ethylene oxide and having an average molecular weight of 2 090.

Results of the experiments.

| Surfactant | Cloud point (°C) | Solubility rate (min) | Cold composition storage |
|---|---|---|---|
| A | 82 | 4.2 | h. liq. |
| B | 82 | 19 | h. liq. |
| C | 82 | 7.6 | h. liq./sol. |
| D | 82 | 2.8 | solid |
| E | 70 | 9.6 | h. liq. |
| F | phase sep. | 15 | h. liq. |
| G | 44 | 20 | h. liq. |
| H | 24 | 20 | h. liq. |

In the table "phase sep." indicates phase separation, "h. liq." indicates hazy or misty liquid, and "h. liq./sol." indicates a state in between hazy liquid and solid.

From the experiments can be concluded that the surfactant composition according to the present invention (surfactant composition A) remains liquid at low temperatures and dissolves rapidly in water.

**Claims**

1. Surfactant composition comprising an alkyl amine ethoxylate and a gel breaker, wherein the gel breaker is a random copolymer of ethylene oxide with propylene oxide and/or butylene oxide.

2. Surfactant composition as claimed in claim 1, wherein the mass ratio between alkyl amine ethoxylate and gel breaker is in the range of from 3 to 15.

3. Surfactant composition as claimed in claim 1 or 2, wherein the contribution of the ethylene oxide groups to the molecular weight of gel breaker is in the range of from 300 to 900.

4. Surfactant composition as claimed in any one of the claims 1-3, wherein the molar ratio of ethylene oxide groups in the gel breaker and propylene oxide and/or butylene oxide groups is in the range of from 10 to 20.

5. Oil well fluid comprising a stable oil-in-water emulsion including between 50 and 96 %v of an aqueous phase, between 3 and 40 %v of an oil phase, and between 1 and 10 %v of the surfactant composition as claimed in any one of the claims 1-4.

6. Oil production fluid comprising a stable oil-in-water emulsion including between 50 and 96 %v of an aqueous phase, between 3 and 35 %v of an oil phase, and between 1 and 15 %v of the surfactant composition as claimed in any one of the claims 1-4.

**Patentansprüche**

1. Tensidzusammensetzung, umfassend ein Alkylaminethoxylat und einen Gelbrecher, in welcher der Gelbrecher ein statistisches Copolymer aus Ethylenoxyd und Propylenoxyd und/oder Butylenoxyd ist.

2. Tensidzusammensetzung, wie in Anspruch 1 beansprucht, in welcher das Massenverhältnis von Alkylaminethoxylat und Gelbrecher im Bereich von 3:1 bis 15:1 liegt.

3. Tensidzusammensetzung, wie in Anspruch 1 oder 2 beansprucht, in welcher der Beitrag der Ethylenoxydgruppen zu dem Molekulargewicht des Gelbrechers im Bereich von 300 bis 900 liegt.

4. Tensidzusammensetzung, wie in irgendeinem der Ansprüche 1 bis 3 beansprucht, in welcher das Molverhältnis von Ethylenoxydgruppen in dem Gelbrecher zu den Propylenoxyd- und/oder Butylenoxydgruppen im Bereich von 10:1 bis 20:1 liegt.

5. Flüssigkeit für Erdölbohrungen, umfassend eine stabile Öl-in-Wasser-Emulsion, welche zwischen 50 und 96 Vol-% einer wäßrigen Phase, zwischen 3 und 40 Vol-% einer Ölphase und zwischen 1 und 10 Vol-% der Tensidzusammensetzung enthält, wie in irgendeinem der Ansprüche 1 bis 4 beansprucht.

6. Erdölförderflüssigkeit, umfassend eine stabile Öl-in-Wasser-Emulsion, welche zwischen 50 und 96 Vol-% einer wäßrigen Phase, zwischen 3 und 35 Vol-% einer Ölphase und zwischen 1 und 15 Vol-% der Tensidzusammensetzung enthält, wie in irgendeinem der Ansprüche 1 bis 4 beansprucht.

**Revendications**

1. Composition tensio-active comprenant un éthoxylate d'alcoyl amine et un destructeur de gel, où le destructeur de gel est un copolymère statistique d'oxyde d'éthylène avec l'oxyde de propylène et/ou l'oxyde de butylène.

2. Composition tensio-active selon la revendication 1, dans laquelle le rapport en poids entre l'éthoxylate d'alcoyl amine et le destructeur de gel est compris entre 3 et 15.

3. Composition tensio-active selon la revendication 1 ou 2, dans laquelle la contribution des groupes oxyde d'éthylène au poids moléculaire du destructeur de gel est comprise entre 300 et 900.

4. Composition tensio-active selon l'une quelconque des revendications 1-3, dans laquelle le rapport molaire entre les groupes oxyde d'éthylène dans le destructeur de gel et les groupes oxyde de propylène et/ou oxyde de butylène est compris entre 10 et 20.

5. Fluide pour puits de pétrole comprenant une émulsion stable du type huile dans l'eau comprenant entre 50 et 96 % en volume d'une phase aqueuse, entre 3 et 40 % en volume d'une phase d'huile et entre 1 et 10 % en volume de la composition tensio-active selon l'une quelconque des revendications 1-4.

6. Fluide pour production de pétrole comprenant une dispersion stable du type huile dans l'eau comprenant entre 50 et 96 % en volume d'une phase aqueuse, entre 3 et 35 % en volume d'une phase d'huile et entre 1 et 15 % en volume de la composition tensio-active selon l'une quelconque des revendications 1-4.